# EUROPÄISCHE PATENTSCHRIFT

(11) **EP 3 018 020 B1**
(45) Veröffentlichungstag und Bekanntmachung des Hinweises auf die Patenterteilung: **11.10.2017**
(21) Anmeldenummer: 15180919.1
(22) Anmeldetag: 13.08.2015
(51) Int. Cl.: B60T 13/58

(54) **HYBRIDBREMSSYSTEM FÜR EIN FAHRZEUG UND VERFAHREN ZUM ANSTEUERN EINES HYBRIDBREMSSYSTEMS FÜR EIN FAHRZEUG**
HYBRID BRAKE SYSTEM FOR A VEHICLE, AND METHOD FOR TRIGGERING A HYBRID BRAKE SYSTEM FOR A VEHICLE
SYSTEME DE FREIN HYBRIDE POUR UN VEHICULE ET PROCEDE DE COMMANDE D'UN SYSTEME DE FREIN HYBRIDE POUR UN VEHICULE

(30) Priorität: 20.08.2014 DE 102014111862
(43) Veröffentlichungstag der Anmeldung: 11.05.2016
(73) Patentinhaber: KNORR-BREMSE Systeme für Nutzfahrzeuge GmbH, 80809 München (DE)
(72) Erfinder: SZELL, Peter, 1163 Budapest (HU)

(56) Entgegenhaltungen:
- DE-A1-102008 003 380
- DE-A1-102009 016 638
- GB-A- 2 091 829
- US-A- 3 832 012

## Beschreibung

Die vorliegende Erfindung bezieht sich auf ein Hybridbremssystem für ein Fahrzeug und ein Verfahren zum Ansteuern eines Hybridbremssystems für ein Fahrzeug.

In den meisten straßengebundenen Fahrzeugen kommen eine Betriebsbremse zum Abbremsen des Fahrzeugs im Fahrbetrieb und eine Feststellbremse zum dauerhaften Blockieren der Räder eines geparkten Fahrzeugs zum Einsatz. Die Bremsaktoren der Betriebsbremse und der Feststellbremse können ihre Bremskraft an dieselbe Bremszange anlegen. Bekannte Bremssysteme haben zwei Bremskreise, wobei einer der Bremskreise die Bremsaktuatoren einiger der Räder und der andere der Bremskreise die Bremsaktuatoren der anderen Räder steuert.

Die DE 10 2008 003 380 A1 offenbart eine als Hybridsystem ausgebildete Bremsanlage zur Abbremsung eines Fahrzeugs mit elektropneumatisch oder pneumatisch sowie elektromechanisch betätigbaren Radbremsen an der Vorderachse des Fahrzeugs. Die elektromechanische Bremsbetätigungseinrichtung kann entweder eine Hilfsbremsfunktion, eine Feststellbremsfunktion oder beide Bremsfunktionen zur Verfügung stellen.

Die GB 2 091 829 A offenbart ein hydraulisches Antirutschbremssystem, bei dem zwei einem Vorderrad zugeordnete Bremsaktuatoren unter Verwendung von Modulatoren so angesteuert werden, dass ein Rutschen des Rades vermieden wird.

Die US 3832012 A offenbart eine Antirutschbremsschaltung bei der einem Vorderrad ein Betriebsbremsaktuator und ein Hilfsbremsaktuator zugeordnet ist.

Es ist die Aufgabe der vorliegenden Erfindung, ein verbessertes Hybridbremssystem für eine Betriebsbremse für ein Fahrzeug und ein verbessertes Verfahren zum Ansteuern eines Hybridbremssystems für eine Betriebsbremse für ein Fahrzeug zu schaffen.

Diese Aufgabe wird durch ein Hybridbremssystem für eine Betriebsbremse für ein Fahrzeug und ein Verfahren zum Ansteuern eines Hybridbremssystems für eine Betriebsbremse für ein Fahrzeug gemäß den unabhängigen Ansprüchen gelöst. Vorteilhafte Ausgestaltungen ergeben sich aus den jeweiligen Unteransprüchen und der nachfolgenden Beschreibung.

Ein Einsatz zweier separater Bremskreise mit Bremsaktoren für die Betriebsbremse ermöglicht die Realisierung eines sichereren und feiner abstimmbaren Bremssystems für ein Fahrzeug.

Es wird ein Hybridbremssystem für eine Betriebsbremse für ein Fahrzeug vorgestellt, das die folgenden Merkmale aufweist:
einen ersten Bremskreis zum Ansteuern eines einem Rad des Fahrzeugs zuordenbaren ersten Bremsaktors zum Abbremsen des Rades ansprechend auf eine Betätigung einer Betätigungseinrichtung der Betriebsbremse des Fahrzeugs; und
einen zweiten Bremskreis zum Ansteuern eines dem Rad des Fahrzeugs zuordenbaren zweiten Bremsaktors zum Abbremsen des Rades ansprechend auf die Betätigung der Betätigungseinrichtung.

Bei dem Fahrzeug kann es sich um ein Straßenfahrzeug oder ein Schienenfahrzeug handeln. Insbesondere kann es sich um ein mehrspuriges Straßenfahrzeug, beispielsweise ein Kraftfahrzeug zur Personen- oder Güterbeförderung, eine landwirtschaftliche Maschine oder einen Anhänger handeln. Das Hybridbremssystem kann Teil einer Bremsanlage des Fahrzeugs sein, die neben der Betriebsbremse eine Feststellbremse umfassen kann. Insbesondere kann das Hybridbremssystem zur Realisierung der Betriebsbremse verwendet werden. Unter dem Hybridbremssystem kann ein Bremssystem für das Fahrzeug verstanden werden, das zum Abbremsen des Rades des Fahrzeugs den ersten Bremskreis und den zweiten Bremskreis als separate Bremskreise einsetzt, wobei beide Bremskreise mit der Betätigungseinrichtung der Betriebsbremse des Fahrzeugs gekoppelt sind oder über eine Schnittstelle koppelbar sind. Somit ist es nicht erforderlich, dass die Betätigungseinrichtung Teil des Hybridbremssystems ist. Bei einem Bremsaktor kann es sich um ein mechanisches oder um ein elektromechanisches Element handeln, das beispielsweise geeignet ist, um eine Bremskraft auf eine Bremse des Rades auszuüben. Der erste Bremsaktor kann Teil des ersten Bremskreises und der zweite Bremsaktor Teil des zweiten Bremskreises sein. Das Rad kann eines von beispielsweise vier oder mehr Rädern des Fahrzeugs sein. Die Betätigung der Betätigungseinrichtung der Betriebsbremse kann durch einen Fahrer des Fahrzeugs erfolgen, beispielsweise durch ein Bewegen eines Bremspedals der Betätigungseinrichtung mit dem Fuß.

Gemäß einer Ausführungsform des Hybridbremssystems kann eine durch das Hybridbremssystem aufbringbare maximale Gesamtbremskraft zum Abbremsen des Rades einer Kombination einer mittels des ersten Bremsaktors erzeugbaren maximalen ersten Bremskraft und einer mittels des zweiten Bremsaktors erzeugbaren maximalen zweiten Bremskraft entsprechen. Unter einer Kombination kann beispielsweise die Summe aus der ersten und zweiten Bremskraft verstanden werden. So kann das Rad mit einer sehr hohen und fein regulierbaren Kraft und zusätzlich besonders sicher abgebremst werden. Vorteilhafterweise kann bei einem Ausfall eines der beiden Bremskreise der andere nach wie vor zur Verfügung stehen.

Beispielsweise kann dabei der erste Bremskreis durch eine vordefinierte Bremscharakteristik gekennzeichnet sein und zusätzlich oder alternativ der zweite Bremskreis durch eine veränderbare Bremscharakteristik gekennzeichnet ist. Die vordefinierte Bremscharakteristik kann beispielsweise einen konstruktiv vorgegebenen, mit steigender Betätigung der Betätigungseinrichtung monoton ansteigenden und mit sinkender Betätigung der Betätigungseinrichtung monoton abfallenden Verlauf aufweisen. Die veränderbare Bremscharakteristik kann dagegen einen von der Betätigung der Betätigungseinrichtung unabhängigen Verlauf aufweisen. Damit kann eine auf das Rad insgesamt wirkende Gesamtbremskraft noch besser feinreguliert werden.

Gemäß einer weiteren Ausführungsform kann der erste Bremskreis einen Anschluss für einen Druckluftspeicher aufweisen, in dem für einen pneumatischen Betrieb des ersten Bremsaktors erforderliche Druckluft speicherbar ist. Zusätzlich oder alternativ kann der zweite Bremskreis einen Anschluss für eine elektrische Energiespeicherquelle aufweisen, in der für einen elektrischen Betrieb des zweiten Bremsaktors erforderliche elektrische Energie speicherbar ist. Diese Ausführungsform bietet den Vorteil, dass eine redundante Energiequelle zum sicheren Abbremsen des Rades zur Verfügung steht. Als weiterer Vorteil dieser Ausführungsform kann unter Einsatz der Energiespeicherquelle der zweite Bremsaktor unabhängig von einer Betätigung der Betätigungseinrichtung angesteuert werden.

Beispielsweise kann der erste Bremskreis ein mit der Betätigungseinrichtung des Fahrzeugs koppelbares Druckminderventil aufweisen. Das Druckminderventil kann ausgebildet sein, um einen an dem ersten Bremsaktor anliegenden Druck abhängig von der Betätigung der Betätigungseinrichtung zu steuern. Das Druckminderventil kann zwischen dem Druckspeicher und dem ersten Bremskreis angeordnet und ausgebildet sein, um einen in dem Druckbehälter vorgehaltenen Druck entsprechend dem Grad der Betätigung der Betätigungseinrichtung dem ersten Bremsaktor bereitzustellen. Bei maximaler Betätigung der Betätigungseinrichtung - also beispielsweise vollständig heruntergedrücktem Bremspedal - kann der maximale Druck, der dem aktuell in dem Druckbehälter herrschenden Druck entsprechen kann, bereitgestellt werden, bei einer geringeren Betätigung entsprechend weniger. Das Druckminderventil kann eine Kennlinie mit einem monotonen Verlauf aufweisen, sodass der an den ersten Bremsaktor bereitgestellte Druck mit steigender Betätigung der Betätigungseinrichtung steigen oder zumindest konstant bleiben kann. Bei dem Druckminderventil kann es sich beispielsweise um ein Druckventil mit einem Druckbegrenzer handeln. Mit dieser Ausführungsform kann der Druck im ersten Bremskreis auf kostengünstige und wartungsarme Weise geregelt werden.

Gemäß einer besonderen Ausführungsform kann der erste Bremskreis ferner ein Umgehungsventil aufweisen. Das Umgehungsventil kann ausgebildet sein, um in einer ersten Stellung eine das Druckminderventil umgehende Direktverbindung zwischen einem Anschluss für einen Druckspeicher des Hybridbremssystems und dem ersten Bremsaktor zu unterbrechen und in einer zweiten Stellung die Direktverbindung freizugeben, um dem ersten Bremsaktor unabhängig von der Betätigung der Betriebsbremse einen maximalen Druck bereitzustellen. Bei dem Umgehungsventil kann es sich beispielsweise um ein 2-Wege-Ventil handeln. Diese Ausführungsform des Hybridbremssystems bietet die vorteilhafte Möglichkeit, unabhängig von einer Betätigung der Betriebsbremse die maximale Gesamtbremskraft des Hybridbremssystems einsetzen zu können, beispielsweise bei einer durch ein Sicherheitssystem des Fahrzeugs eingeleiteten Notbremsung.

Günstig ist es auch, wenn der zweite Bremskreis einen mit der Betätigungseinrichtung koppelbaren Sensor und ein Steuergerät aufweist. Dabei kann der Sensor ausgebildet sein, um ein der Betätigung der Betätigungseinrichtung entsprechendes Betätigungssignal an das Steuergerät bereitzustellen. Das Steuergerät kann ausgebildet sein, um unter Verwendung des Betätigungssignals ein Steuersignal zum Ansteuern des zweiten Bremsaktors bereitzustellen. Unter Verwendung des Steuergeräts kann eine Regelung des zweiten Bremskreises und somit eine Regelung der Gesamtbremskraft zum Abbremsen des Rades ermöglicht werden.

Beispielsweise kann das Steuergerät ausgebildet sein, um einen Sollwert für eine sich aus einer mittels des ersten Bremsaktors erzeugbaren ersten Bremskraft und einer mittels des zweiten Bremsaktors erzeugbaren zweiten Bremskraft zusammensetzende Gesamtbremskraft zu bestimmen. Ferner kann das Steuergerät ausgebildet sein, um das Steuersignal bereitzustellen, um den zweiten Bremsaktor so anzusteuern, dass die Gesamtbremskraft dem Sollwert entspricht. Auch auf diese Weise kann vorteilhaft eine optimale Kraft zum Abbremsen des Rades - insbesondere zum sanften oder fahrdynamisch optimierten Abbremsen des Rades - ermittelt und bereitgestellt werden.

Beispielsweise kann das Steuergerät ausgebildet sein, um unabhängig von einem Grad der Betätigung der Betätigungseinrichtung einen Sollwert für die Gesamtbremskraft zu bestimmen, der eine zwischen 0 % und 100 % der maximalen Gesamtbremskraft liegende Gesamtbremskraft definiert. Dies ermöglicht sehr gezielte Bremseingriffe, beispielsweise zur fahrdynamischen Stabilisierung des Fahrzeugs.

Insbesondere kann das Steuergerät ausgebildet sein, um das Steuersignal bereitzustellen, um den zweiten Bremsaktor so anzusteuern, dass die zweite Bremskraft der ersten Bremskraft entgegenwirkt oder in einem besonderen Fall die erste Bremskraft von der zweiten Bremskraft aufgehoben wird. Dadurch kann beispielsweise eine durch die Betätigung der Betätigungseinrichtung bewirkte Blockierung des Rades gezielt aufgehoben werden, auch wenn die Betätigung der Betätigungseinrichtung unverändert aufrechterhalten wird.

Das Hybridbremssystem kann eine Keilbremse aufweisen. Dabei können der erste Bremsaktor und der zweite Bremsaktor ausgebildet sein, um die Keilbremse zum Abbremsen des Rades zu betätigen. Der Einsatz einer Keilbremse ermöglicht die Realisierung eines besonders sanften Bremsvorgangs.

Gemäß einer weiteren Ausführungsform kann der erste Bremskreis ausgebildet sein, um zum Abbremsen zumindest einen weiteren Rades des Fahrzeugs ansprechend auf die Betätigung der Betriebsbremse des Fahrzeugs einen dem weiteren Rad zuordenbaren weiteren ersten Bremsaktor anzusteuern. Entsprechend kann der zweite Bremskreis ausgebildet sein, um zum Abbremsen des zumindest einen weiteren Rades des Fahrzeugs ansprechend auf die Betätigung der Betriebsbremse des Fahrzeugs einen dem weiteren Rad zuordenbaren weiteren zweiten Bremsaktor anzusteuern. So kann vorteilhaft ein weiteres Rad des Fahrzeugs ohne das Erfordernis weiterer Bremskreise abgebremst werden. Der beschriebene Ansatz kann dabei in entsprechender Weise auf eine beliebige Anzahl weitere Räder des Fahrzeugs erweitert werden.

Insbesondere kann der zweite Bremskreis ausgebildet sein, um den zweiten Bremsaktor und den weiteren zweiten Bremsaktor so anzusteuern, dass der zweite Bremsaktor eine zweite Bremskraft bereitstellt, die sich von einer von dem weiteren zweiten Bremsaktor bereitgestellten weiteren zweiten Bremskraft unterscheidet. Gemäß diesem Prinzip können sämtliche mit den Bremskreisen gekoppelte Räder eines Fahrzeugs mit unterschiedlichen Kräften abgebremst werden. Damit bietet diese Ausführungsform des Hybridbremssystems eine ideale Grundlage zur Realisierung einer effektiven Antiblockier- oder Antriebsschlupfregelung. Insbesondere kann eine fahrdynamische optimale Bremsverteilung auf die abbremsbaren Räder des Fahrzeugs realisiert werden.

Es wird ferner ein Verfahren zum Ansteuern eines Hybridbremssystems für eine Betriebsbremse für ein Fahrzeug vorgestellt, wobei das Hybridbremssystem einen ersten Bremskreis mit einem einem Rad des Fahrzeugs zuordenbaren ersten Bremsaktor und einen zweiten Bremskreis mit einem dem Rad des Fahrzeugs zuordenbaren zweiten Bremsaktor aufweist, und wobei das Verfahren die folgenden Schritte aufweist:
Ansteuern des ersten Bremsaktors, um ansprechend auf eine Betätigung einer Betätigungseinrichtung der Betriebsbremse des Fahrzeugs das Rad abzubremsen; und
Ansteuern des zweiten Bremsaktors, um ansprechend auf die Betätigung der Betätigungseinrichtung der Betriebsbremse des Fahrzeugs das Rad abzubremsen.

Auch durch diese Ausführungsvariante der Erfindung in Form eines Verfahrens kann die der Erfindung zugrunde liegende Aufgabe schnell und effizient gelöst werden.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines Fahrzeugs mit einem Hybridbremssystem gemäß einem Ausführungsbeispiel der vorliegenden Erfindung;
- Fig. 2: ein Schaltdiagramm eines Hybridbremssystems gemäß einem Ausführungsbeispiel der vorliegenden Erfindung;
- Fig. 3: Diagramme zur Veranschaulichung einer pneumatisch erzeugten Bremskraft und einer elektrisch erzeugten Bremskraft des Hybridbremssystems aus Fig. 2, gemäß einem Ausführungsbeispiel der vorliegenden Erfindung;
- Fig. 4: ein Schaltdiagramm eines Hybridbremssystems gemäß einem weiteren Ausführungsbeispiel der vorliegenden Erfindung;
- Fig. 5: Diagramme zur Veranschaulichung einer pneumatisch erzeugten Bremskraft und einer elektrisch erzeugten Bremskraft des Hybridbremssystems aus Fig. 4, gemäß einem Ausführungsbeispiel der vorliegenden Erfindung;
- Fig. 6: ein Schaltdiagramm eines Hybridbremssystems mit Keilbremse, gemäß einem Ausführungsbeispiel der vorliegenden Erfindung; und
- Fig. 7: ein Ablaufdiagramm eines Verfahrens zum Ansteuern eines Hybridbremssystems für ein Fahrzeug, gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

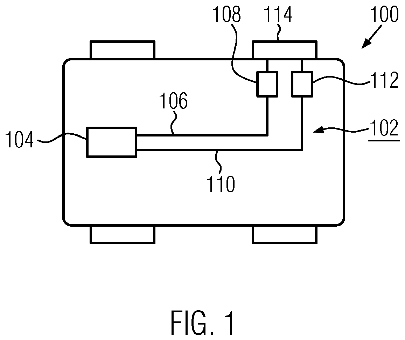

Fig. 1 zeigt eine schematische Darstellung eines Fahrzeugs 100 mit einem Hybridbremssystem 102 gemäß einem Ausführungsbeispiel der vorliegenden Erfindung. Bei dem Fahrzeug 100 handelt es sich um ein straßengebundenes Fahrzeug wie einen Lastkraftwagen oder Personenkraftwagen. Das Hybridbremssystem 102 als Betriebsbremse oder Teil einer Betriebsbremse des Fahrzeugs 100 ist mit einer Betätigungseinrichtung 104 zum Betätigen der Betriebsbremse des Fahrzeugs 100 gekoppelt und umfasst einen ersten Bremskreis 106 zum Ansteuern eines ersten Bremsaktors 108 und einen separaten zweiten Bremskreis 110 zum Ansteuern eines zweiten Bremsaktors 112. Die Bremsaktoren 108, 112 sind einem Rad 114 des Fahrzeugs zugeordnet. Die Bremsaktoren 108, 112 sind über ihre zugeordneten Bremskreise 106, 110 separat ansteuerbar und ausgebildet, um das Rad 114 ansprechend auf eine Betätigung der Betriebsbremse 104 abzubremsen. Dazu können die Bremsaktoren 108, 112 ausgebildet sein, um Bremskräfte zum Abbremsen des Rads 114 an eine dem Rad zugeordneten Bremse, beispielsweise eine Scheibenbremse, bereitzustellen.

Gemäß einem Ausführungsbeispiel des Hybridbremssystems 102 ist der erste Bremskreis 106 durch eine vordefinierte Bremscharakteristik gekennzeichnet und der zweite Bremskreis 110 durch eine veränderbare Bremscharakteristik gekennzeichnet. Gemäß einem weiteren Ausführungsbeispiel sind die Bremskreise 106, 110 mit weiteren Rädern 114, beispielsweise mit sämtlichen Rädern 114 des Fahrzeugs 100, gekoppelt und ausgebildet, um zum Abbremsen der Räder 114 den Rädern 114 zugeordnete weitere erste und zweite Bremsaktoren 108, 112 anzusteuern. Dabei kann die Anzahl der Bremsaktoren 108, 112 der beiden Bremskreise 106, 110 gleich oder unterschiedlich sein.

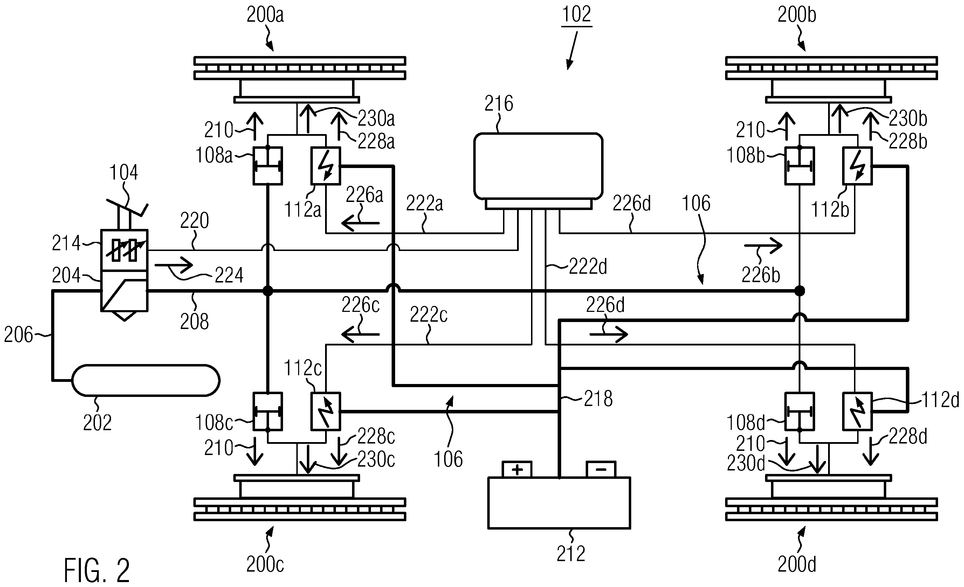

Fig. 2 zeigt ein Schaltdiagramm eines Ausführungsbeispiels des Hybridbremssystems 102 aus Fig. 1. Gezeigt ist die Betätigungseinrichtung 104, die über die zwei separaten Bremskreise 106, 110 mit beispielhaft vier Bremsen 200a, 200b, 200c, 200d gekoppelt ist. Die Bremsen 200a, 200b, 200c, 200d sind hier beispielhaft je mit einer Bremsbacke und einer Bremsscheibe dargestellt. Pro Rad des das Hybridbremssystem 102 aufweisenden Fahrzeugs kann eine Bremse 200a, 200b, 200c, 200d vorgesehen sein.

Der erste Bremskreis 106 ist als ein pneumatischer Bremskreis und der zweite Bremskreis 110 als ein elektrischer Bremskreis ausgeführt.

Der erste Bremskreis 106 umfasst einen Druckspeicher 202, ein mit der Betätigungseinrichtung 104 gekoppeltes Druckminderventil 204 und vier erste Bremsaktoren 108a, 108b, 108c, 108d, wobei der Bremsaktor 108a der Bremse 200a, der Bremsaktor 108b der Bremse 200b, der Bremsaktor 108c der Bremse 200c und der Bremsaktor 108d der Bremse 200d zugeordnet ist.

Der Druckspeicher 202 ist über eine pneumatische Leitung 206 mit einem Eingangsanschluss des Druckminderventils 204 verbunden. Ein Ausgangsanschluss des Druckminderventils 204 ist über ein Leitungssystem 208 aus pneumatischen Leitungen mit Steueranschlüssen der Bremsaktoren 108a, 108b, 108c, 108d verbunden.

Im Betrieb des Hybridbremssystems 102 ist der Druckluftspeicher 202 ausgebildet, um über die Leitung 206 einen in dem Druckluftspeicher 202 herrschenden Maximaldruck an den Eingangsanschluss des Druckminderventils 204 bereitzustellen. Das Druckminderventil 204 ist ausgebildet, um unter Verwendung des an dem Eingangsanschluss bereitgestellten Maximaldrucks einen Ansteuerdruck an das Leitungssystem 208 bereitzustellen. Das Druckminderventil 204 ist ausgebildet, um eine Größe des Ansteuerdrucks gesteuert durch einen Grad einer Betätigung der Betätigungseinrichtung 104 einzustellen. Gemäß einem Ausführungsbeispiel ist das Druckminderventil 204 ausgebildet, um bei einer maximalen Betätigung der Betätigungseinrichtung 104, beispielsweise bei einem voll durchgedrückten Bremspedal der Betätigungseinrichtung 104, den Maximaldruck als Ansteuerdruck bereitzustellen.

Bei einer Teilbetätigung der Betätigungseinrichtung 104 ist das Druckminderventil 204 ausgebildet, um einen Ansteuerdruck bereitzustellen, der kleiner als der Maximaldruck ist, und bei einer nicht betätigten Betätigungseinrichtung 104 ist das Druckminderventil 204 ausgebildet, um einen Durchlass zwischen dem Eingangsanschluss und dem Ausgangsanschluss des Druckminderventils 204 zu sperren. Das Druckminderventil 204 kann eine monotone Kennlinie aufweisen, bei der der Ansteuerdruck bis zum Erreichen des Maximaldrucks umso größer wird, umso größer die Betätigung der Betätigungseinrichtung 104 ist, also beispielsweise umso stärker das Bremspedal durchgetreten ist.

Der von dem Druckminderventil 204 bereitgestellte Ansteuerdruck wird über das Leitungssystem 208 über einen ersten Knotenpunkt an die Steuereingänge der ersten Bremsaktoren 108a, 108c und über einen zweiten Knotenpunkt an die Steuereingänge der ersten Bremsaktoren 108b, 108d bereitgestellt. Somit werden die ersten Bremsaktoren 108a, 108b, 108c, 108d alle mit dem gleichen Ansteuerdruck beaufschlagt. Die ersten Bremsaktoren 108a, 108b, 108c, 108d sind ausgebildet, um angetrieben durch den an den Steuereingängen anliegenden Ansteuerdruck erste Bremskräfte 210 zum Drücken der Bremsbacken der Bremsen 200a, 200b, 200c, 200d gegen die zugeordneten Bremsscheiben bereitzustellen. Gemäß einem Ausführungsbeispiel weisen die ersten Bremsaktoren 108a, 108b, 108c, 108d je die gleiche Übertragungscharakteristik auf, sodass die von den Bremsaktoren 108a, 108b, 108c, 108d bereitgestellten ersten Bremskräfte 210 gleich groß sind.

Der zweite Bremskreis 110 umfasst einen Energiespeicher 212 in Form einer Batterie, einen mit der Betätigungseinrichtung 104 gekoppelten Sensor 214 und vier zweite Bremsaktoren 112a, 112b, 112c, 112d, wobei der Bremsaktor 112a der Bremse 200a, der Bremsaktor 112b der Bremse 200b, der Bremsaktor 112c der Bremse 200c und der Bremsaktor 112d der Bremse 200d zugeordnet ist. Ferner weist der zweite Bremskreis 110 ein Steuergerät 216 auf.

Der Energiespeicher 212 ist über ein Leitungssystem 218 aus elektrischen Leitungen mit Versorgungsanschlüssen der zweiten Bremsaktoren 112a, 112b, 112c, 112d verbunden, um beispielsweise eine Betriebsspannung zum Betreiben der Bremsaktoren 112a, 112b, 112c, 112d an die Bremsaktoren 112a, 112b, 112c, 112d bereitzustellen. Ein Ausgangsanschluss des Sensors 214 ist über eine elektrische Leitung 220 mit einem Eingangsanschluss des Steuergeräts 216 verbunden. Das Steuergerät 216 weist vier Ausgangsanschlüsse auf, über die das Steuergerät 216 über elektrische Leitungen 222a, 222b, 222c, 222d mit Steueranschlüssen der zweiten Bremsaktoren 112a, 112b, 112c, 112d verbunden ist.

Der Sensor 214 ist ausgebildet, um gesteuert durch eine Betätigung der Betätigungseinrichtung 104 ein Betätigungssignal 224 bereitzustellen, das die Betätigung, insbesondere einen Grad der Betätigung, der Betätigungseinrichtung 104 abbildet. Der Sensor 214 ist ausgebildet, um das Betätigungssignal 224 über die Leitung 220 an das Steuergerät 216 bereitzustellen. Das Steuergerät 216 ist ausgebildet, um unter Verwendung des Betätigungssignals 224 Steuersignale 226a, 226b, 226c, 226d zum Ansteuern der zweiten Bremsaktoren 112a, 112b, 112c, 112d über die Leitungen 222a, 222b, 222c, 222d an die Steueranschlüsse der zweiten Bremsaktoren 112a, 112b, 112c, 112d bereitzustellen.

Die zweiten Bremsaktoren 112a, 112b, 112c, 112d sind ausgebildet, um gesteuert durch die Steuersignale 226a, 226b, 226c, 226d zweite Bremskräfte 228a, 228b, 228c, 228d zum Drücken der Bremsbacken der Bremsen 200a, 200b, 200c, 200d gegen die zugeordneten Bremsscheiben bereitzustellen. Dabei ist das Steuergerät 216 ausgebildet, um das Steuersignal 226a an den zweiten Bremsaktor 112a, das Steuersignal 226b an den zweiten Bremsaktor 112b, das Steuersignal 226c an den zweiten Bremsaktor 112c und das Steuersignal 226d an den zweiten Bremsaktor 112d bereitzustellen. Das Steuergerät 216 ist ausgebildet, um die Steuersignale 226a, 226b, 226c, 226d bei Bedarf unabhängig voneinander und insbesondere mit voneinander unabhängigen Werten bereitzustellen zu können. Auf diese Weise können die zweiten Bremsaktoren 112a, 112b, 112c, 112d unter Verwendung des Steuergeräts 216 so angesteuert werden, dass sich die von den zweiten Bremsaktoren 112a, 112b, 112c, 112d bereitgestellten zweiten Bremskräfte 228a, 228b, 228c, 228d voneinander unterscheiden. Andererseits ist das Steuergerät 216 ausgebildet, um die Steuersignale 226a, 226b, 226c, 226d bei Bedarf gemeinsam mit gleichen Werten bereitzustellen, sodass die von den zweiten Bremsaktoren 112a, 112b, 112c, 112d bereitgestellten zweiten Bremskräfte 228a, 228b, 228c, 228d gleich sein können.

Insbesondere können die zweiten Bremsaktoren 112a, 112b, 112c, 112d gemäß einem Ausführungsbeispiel unter Verwendung des Steuergeräts 216 ferner so angesteuert werden, dass sie die Bremsbacken der Bremsen 200a, 200b, 200c, 200d von den zugeordneten Bremsscheiben weg ziehen, anstatt sie gegen diese zu drücken. Sozusagen üben dann die zweiten Bremsaktoren 112a, 112b, 112c, 112d "negative zweite Bremskräfte" 228a, 228b, 228c, 228d aus, die den von den ersten Bremsaktoren108a, 108b, 108c, 108d bereitgestellten ersten Bremskräften 210 entgegenwirken. In einem Sonderfall kann eine "negative zweite Bremskraft" 228a, 228b, 228c, 228d in ihrer Größe einer ersten Bremskraft 210 entsprechen und diese damit aufheben. Liegt beispielsweise an der Bremse 200a über den zweiten Bremsaktor 112a eine "negative zweite Bremskraft" 228a an der zugeordneten Bremsbacke an, die in ihrer Größe einer "positiven ersten Bremskraft" 210, die über den ersten Bremsaktor 108a an der Bremsbacke anliegt, entspricht, wird die Bremsbacke nicht bewegt. Somit kann ein Abbremsen des Rads verhindert werden, obwohl von dem ersten Bremsaktor 108a eine erste Bremskraft zum Abbremsen des Rads bereitgestellt wird.

Die sich gegebenenfalls pro Bremseinrichtung 200a, 200b, 200c, 200d unterscheidenden zweiten Bremskräfte 228a, 228b, 228c, 228d addieren sich mit den von den ersten Bremsaktoren 108a, 108b, 108c, 108d bereitgestellten ersten Bremskräften 210, die pro Bremse 200a, 200b, 200c, 200d gleich sind, zu Gesamtbremskräften 230a, 230b, 230c, 230d. Die Gesamtbremskraft 230a entspricht dabei der Bremskraft, mit der die Bremsbacke der Bremse 200a gegen die zugeordnete Bremsscheibe gedrückt wird. Die Gesamtbremskraft 230b entspricht der Bremskraft, mit der die Bremsbacke der Bremse 200b gegen die zugeordnete Bremsscheibe gedrückt wird, die Gesamtbremskraft 230c entspricht der Bremskraft, mit der die Bremsbacke der Bremse 200c gegen die zugeordnete Bremsscheibe gedrückt wird, und die Gesamtbremskraft 230d entspricht der Bremskraft, mit der die Bremsbacke der Bremse 200d gegen die zugeordnete Bremsscheibe gedrückt wird. Maximale Gesamtbremskräfte 230a, 230b, 230c, 230d entsprechen somit den jeweiligen Summen der mittels der je ersten Bremsaktoren 108a, 108b, 108c, 108d erzeugbaren maximalen ersten Bremskräfte 210 mit den mittels der je zweiten Bremsaktoren 112a, 112b, 112c, 112d erzeugbaren maximalen zweiten Bremskräften 228a, 228b, 228c, 228d.

Aufgrund der sich gegebenenfalls unterscheidenden zweiten Bremskräfte 228a, 228b, 228c, 228d können sich die Gesamtbremskräfte 230a, 230b, 230c, 230d ebenfalls unterscheiden.

Gemäß einem Ausführungsbeispiel ist das Steuergerät 216 ausgebildet, um für jede der Bremsen 200a, 200b, 200c, 200d einen individuellen Sollwert für eine auf die jeweilige Bremse 200a, 200b, 200c, 200d wirkende Gesamtbremskraft 230a, 230b, 230c, 230d zu bestimmen. Um beispielsweise die auf die Bremse 200a wirkende Gesamtbremskraft 230a auf den individuellen Sollwert einzustellen, ist das Steuergerät 216 ausgebildet, um das Steuersignal 226a so bereitzustellen, dass von dem zweiten Bremsaktor 112a eine zweite Bremskraft 228a bereitgestellt wird, die sich zusammen mit der von dem ersten Bremsaktor 108a bereitgestellten ersten Bremskraft 210 zu der den individuellen Sollwert aufweisenden Gesamtbremskraft 230a addiert. Entsprechend kann das Steuergerät 216 weitere individuelle Steuersignale 226b, 226c, 226d an die zweiten Bremsaktoren 112b, 112c, 112d bereitstellen, um die auf die weiteren Bremsen 200b, 200c, 200d wirkenden Gesamtbremskräfte 230b, 230c, 230d auf die den weiteren Bremsen 200b, 200c, 200d zugewiesenen individuellen Sollwerte einzustellen. Jeder Sollwert für die Gesamtbremskräfte 230a, 230b, 230c, 230d kann zwischen 0 % und 100 % der je maximal möglichen Gesamtbremskraft 230a, 230b, 230c, 230d liegen.

Zum Bestimmen der individuellen Sollwerte der Gesamtbremskraft 230a, 230b, 230c, 230d kann das Steuergerät 216 beispielsweise weitere Eingangssignale verarbeiten, die beispielsweise ein Blockieren eines Rades des Fahrzeugs oder einen kritischen Fahrzustand des Fahrzeugs anzeigen.

Gemäß einem Ausführungsbeispiel sind das Druckminderungsventil 204 und der Sensor 214 zu einer Funktionseinheit zusammengefasst, beispielsweise in Form eines Fußbremsmoduls. Der Sensor 214 kann zwei voneinander unabhängige Sensoreinheiten zum Erfassen eines Grads der Betätigung der Betätigungseinrichtung 104 aufweisen. Eine Sensoreinheit kann beispielsweise ein Potentiometer oder einen Magnetfeldsensor umfassen, der ausgebildet sein kann, um eine durch eine Betätigung der Betätigungseinrichtung 104 bewirkte Magnetfeldänderung zu erfassen.

Zusammenfassend zeigt Fig. 2 ein Bremssystem 102 mit zwei Bremskreisen 106, 110, wobei der eine Bremskreis 106 mit Druckluft und der andere Bremskreis 110 mit elektrischer Energie, beispielsweise über einen Elektromotor, angesteuert wird. Beide Bremskreise 106, 110 können alle Räder des zugeordneten Fahrzeugs parallel und simultan abbremsen. Dabei stellt jeder der Bremskreise 106, 110 nur einen Bruchteil, z. B. die Hälfte, der erforderlichen Gesamtbremskraft bereit; die maximale Gesamtbremskraft kann nur durch beide Bremskreise 106, 110 gemeinsam erzeugt werden.

Im Folgenden wird ein Ausführungsbeispiel der vorliegenden Erfindung anhand von Fig. 2 detailliert beschrieben. Der pneumatische Bremskreis 106 verfügt weder über eine Informationsverarbeitung noch ein Steuergerät in Form einer ECU und ist ausgebildet, um den Druck bzw. die Bremskräfte 210 proportional zur Bremspedalstellung der Betätigungseinrichtung 104 bereitzustellen. Der zweite Bremskreis 110 ist elektronisch gesteuert und ausgebildet, um den zugeordneten Bremsbacken die nominalen Bremskräfte 228a, 228b, 228c, 228d in zwei entgegengesetzten Richtungen bereitzustellen. Über den zweiten Bremskreis 110 können die Bremsbacken mit derselben Kraft an die Bremsscheiben gedrückt werden, mit der sie von diesen weggezogen werden können. Die im pneumatischen Bremskreis 106 maximal erreichbare Bremskraft 210 ist nie höher als die im elektrischen Bremskreis 110 maximal erreichbare Bremskraft 228a, 228b, 228c, 228d. Die nominalen Gesamtbremskräfte 230a, 230b, 230c, 230d entsprechen der Summe der durch die pneumatisch aktuierten ersten Bremsaktoren 108a, 108b, 108c, 108d bereitgestellten ersten Bremskräfte 210 mit den zweiten Bremskräften 228a, 228b, 228c, 228d, die durch die mit einem Elektromotor angesteuerten zweiten Bremsaktoren 112a, 112b, 112c, 112d bereitgestellt werden.

Da die Elektromotoren ausgebildet sind, um die Bremsbacken mit zumindest derselben Kraft von den Bremsscheiben wegzuziehen, mit der die pneumatischen Bremsaktoren 108a, 108b, 108c, 108d die Bremsbacken an die Bremsscheiben drücken, ist das Hybridbremssystem 102 in der Lage, die Abbremsung eines Rades vollständig zurückzuhalten, selbst bei voll durchgetretenem Bremspedal.

Die ersten Bremsaktoren 108a, 108b, 108c, 108d weisen eine vordefinierte Charakteristik in Abhängigkeit der Betätigung des Bremspedals 104 auf, die zweiten Bremsaktoren 112a, 112b, 112c, 112d sind elektrisch ansteuerbar. Die zweiten Bremsaktoren 112a, 112b, 112c, 112d können "positive Bremskräfte" ausüben, die zu der "positiven Bremskraft" 210 der ersten Bremsaktoren 108a, 108b, 108c, 108d addiert werden können. Alternativ können die zweiten Bremsaktoren 112a, 112b, 112c, 112d "negative Bremskräfte" ausüben, die der "positiven Bremskraft" 210 entgegenwirken können. Über den elektronisch steuerbaren zweiten Bremskreis 110 können unabhängig von der Bremspedalstellung beliebige zweite Bremskräfte 228a, 228b, 228c, 228d zwischen einem minimalen Wert und einem maximalen Wert bereitgestellt werden.

Das gesamte Hybridbremssystem 102 wird durch die ECU 216 gesteuert. Die ECU 216 verfügt über Informationen über den Status des ersten Bremskreises 106 mit vordefinierter Charakteristik und ist ausgebildet, um die zweiten Bremskräfte 228a, 228b, 228c, 228d des ansteuerbaren zweiten Bremskreises 110 unabhängig von der Bremspedalstellung individuell an jedem zweiten Bremsaktor 112a, 112b, 112c, 112d zwischen einem Minimalwert und einem Maximalwert einzustellen. Optional kann unter Verwendung eines zusätzlichen von der ECU 216 angesteuerten Ventils die maximale erste Bremskraft 210 des vordefinierten ersten Bremskreises 106 unabhängig von der Betätigung der Betriebsbremse 104 bereitgestellt werden.

Gemäß Ausführungsbeispielen kann der erste Bremskreis 106 mit vordefinierter Bremscharakteristik anstelle der Verwendung von Druckluft auch hydraulisch oder mechanisch gesteuert sein. Statt der Elektromotoren können auch Elektromagnete, eine Hydraulik oder Druckluft zum Betrieb der zweiten Bremsaktoren 112a, 112b, 112c, 112d eingesetzt werden. Auch können gemäß Ausführungsbeispielen die zweiten Bremsaktoren 112a, 112b, 112c, 112d des zweiten Bremskreises 110 als Aktoren einer Feststellbremse des Fahrzeugs fungieren oder als Bremsgestängesteller eingesetzt werden.

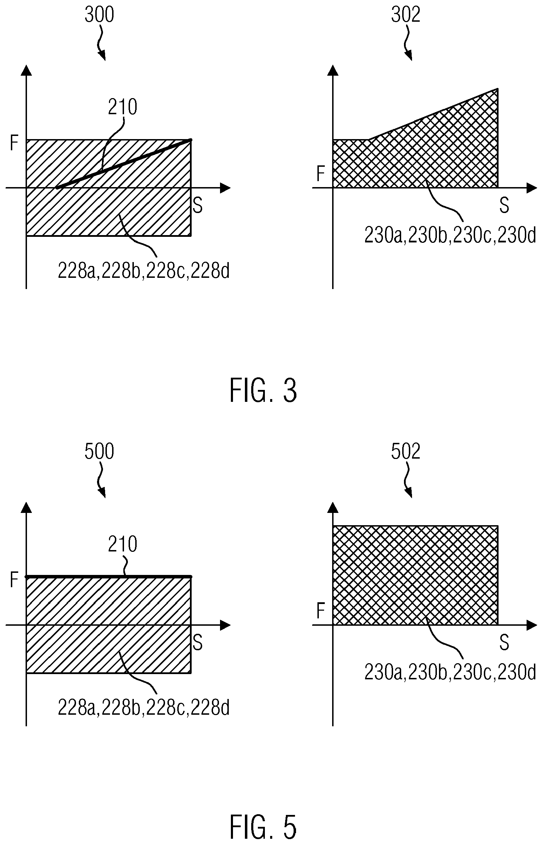

Fig. 3 zeigt Diagramme zur Veranschaulichung der möglichen Betriebsbereiche eines pneumatisch angesteuerten Bremsaktors und eines elektrisch angesteuerten Bremsaktors, beispielsweise des Hybridbremssystems aus Fig. 2, gemäß einem Ausführungsbeispiel der vorliegenden Erfindung. Gezeigt sind ein erstes Diagramm 300 und ein zweites Diagramm 302, jeweils als kartesisches Koordinatensystem mit einem auf der Abszisse aufgetragenen Pedalweg S eines Bremspedals einer Betätigungseinrichtung und einer auf der Ordinate aufgetragenen Bremskraft F.

Das erste Diagramm 300 zeigt einen vorgegebenen Verlauf einer ersten Bremskraft 210 eines beispielhaft pneumatisch angesteuerten ersten Bremsaktors über den Pedalweg S und einen Wertebereich von zweiten Bremskräften 228a, 228b, 228c, 228d von beispielhaft mit einem Elektromotor angesteuerten zweiten Bremsaktoren. Die erste Bremskraft 210 kann beispielhaft mit einem der in Fig. 2 veranschaulichten ersten Bremsaktoren bereitgestellt werden. Der Verlauf der ersten Bremskraft 210 ist monoton ansteigend, beginnend bei einem Pedalweg größer null. Die zweiten Bremskräfte 228a, 228b, 228c, 228d können mit den in Fig. 2 veranschaulichten zweiten Bremsaktoren bereitgestellt werden. Aus dem ersten Diagramm 300 ist ersichtlich, dass die zweiten Bremskräfte 228a, 228b, 228c, 228d unabhängig von dem Pedalweg S je Werte annehmen können, die zwischen einer über den Pedalweg S konstanten maximalen "positiven Bremskraft" und einer über den Pedalweg S konstanten maximalen "negativen Bremskraft" liegen.

Unter einer "positiven Bremskraft" kann eine Bremskraft verstanden werden, mit der die Bremsbacke an die Bremsscheibe gedrückt wird. Unter einer "negativen Bremskraft" kann eine Bremskraft verstanden werden, mit der die Bremsbacke von der Bremsscheibe zurückgezogen wird. Gemäß einem Ausführungsbeispiel ist die maximale "positive Bremskraft" betragsmäßig gleich groß wie die maximale "negative Bremskraft". Ferner entspricht die maximal erreichbare erste Bremskraft, beispielsweise bei vollständig betätigter Betätigungseinrichtung, der maximalen "positiven Bremskraft", die von den zweiten Bremsaktoren bereitgestellt werden kann. Somit können die zweiten Bremskräfte 228a, 228b, 228c, 228d die maximale erste Bremskraft 210 vollständig aufheben.

Das zweite Diagramm 302 zeigt eine Charakteristik möglicher Gesamtbremskräfte 230a, 230b, 230c, 230d aus erster Bremskraft und zweiter Bremskraft, wenn die zweite Bremskraft als "positive Bremskraft" erzeugt und bereitgestellt wird. Die Gesamtbremskräfte 230a, 230b, 230c, 230d werden entsprechend aus der Summe der ersten Bremskraft 210 und den maximalen zweiten Bremskräften 228a, 228b, 228c, 228d gebildet. Maximale Gesamtbremskräfte 230a, 230b, 230c, 230d werden am Ende des Pedalwegs S erreicht. Beispielsweise wird eine Gesamtbremskraft 230a aus der Summe der ersten Bremskraft 210 und der zweiten Bremskraft 228a gebildet.

Wie das Diagramm 300 anhand der Kennlinie 210 zeigt, wirkt der pneumatisch angesteuerte erste Bremsaktor aufgrund des zurückzulegenden Pedalwegs S später als der elektrisch angesteuerte zweite Bremsaktor. Entsprechend kann gemäß einem Ausführungsbeispiel zu Beginn eines Bremsvorgangs lediglich der beispielsweise mit einem Elektromotor angesteuerte zweite Bremsaktor aktiv sein. So kann über den elektrischen Bremskreis der Bremsvorgang besonders sanft eingeleitet werden, da der Elektromotor feingesteuert werden kann. Da sich im normalen Fahrbetrieb die meisten Bremsaktivitäten in diesem Bereich, in dem nur der zweite Bremsaktor aktiv ist, ereignen, kann gleichzeitig vorteilhaft der Druckluftverbrauch reduziert werden.

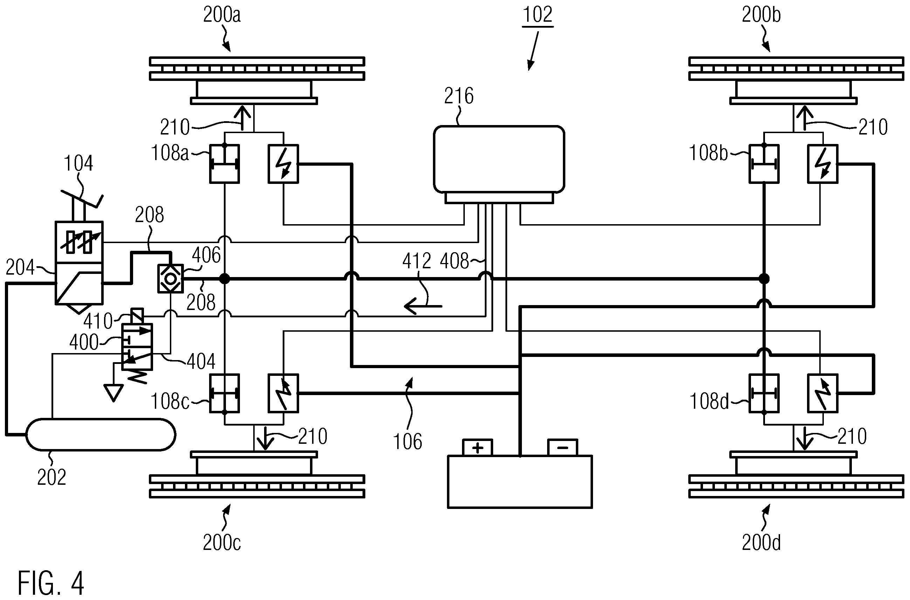

Fig. 4 zeigt ein Schaltdiagramm des Hybridbremssystems 102 gemäß einem weiteren Ausführungsbeispiel der vorliegenden Erfindung. Das in Fig. 4 illustrierte beispielhafte Hybridbremssystem 102 entspricht dem in Fig. 2 gezeigten, mit dem Unterschied, dass der erste Bremskreis 106 ein Umgehungsventil 400 zum Umgehen des Druckminderventils 204 aufweist. Für eine Direktverbindung zwischen dem Druckspeicher 202 und den ersten Bremsaktoren 108a, 108b, 108c, 108d ist der Druckspeicher 202 über eine pneumatische Leitung 402 mit einem Eingangsanschluss des Umgehungsventils 400 verbunden. Ein Ausgangsanschluss des Umgehungsventils 400 ist über eine weitere Leitung 404 und ein Rückschlagventil 406 mit dem Leitungssystem 408 und somit mit Steueranschlüssen der ersten Bremsaktoren 108a, 108b, 108c, 108d verbunden. Das zwischen der Leitung 404 und dem Leitungssystem 208 angeordnete Rückschlagventil 406 ist ausgebildet, um entweder den Ausgangsanschluss des Umgehungsventils 400 oder den Ausgangsanschluss des Druckminderungsventils 204 mit den Steueranschlüssen der ersten Bremsaktoren 108a, 108b, 108c, 108d zu verbinden.

Bei dem in Fig. 4 gezeigten Ausführungsbeispiel ist das Umgehungsventil 400 als ein 3/2-Ventil ausgeführt und ausgebildet, um in einer ersten Stellung die das Druckminderventil 204 umgehende Direktverbindung zwischen dem Druckspeicher 202 und den ersten Bremsaktoren 108a, 108b, 108c, 108d zu unterbrechen und die Leitung 404 mit einem Luftauslass zu verbinden. In einer zweiten Stellung ist das das Umgehungsventil 400 ausgebildet, die Direktverbindung freizugeben, um den ersten Bremsaktoren 108a, 108b, 108c, 108d unabhängig von einer Betätigung der Betriebsbremse 104 den maximalen Druck des Druckspeichers 202 zur Verfügung zu stellen. In Fig. 4 ist das Umgehungsventil 400 in der ersten Stellung gezeigt, die hier die über einen Federdruck eingestellte Ruheposition des Umgehungsventils 400 darstellt.

Über eine elektrische Leitung 408 ist das Steuergerät 216 mit einem Steueranschluss 410 des Umgehungsventils 400 gekoppelt. Das Steuergerät 216 ist ausgebildet, um ansprechend auf eine Bremsinformation über die elektrische Leitung 408 ein Steuersignal 412 an den Steueranschluss 410 bereitzustellen, unter dessen Verwendung das Umgehungsventil 400 gegen den Federdruck von der ersten Stellung in die zweite Stellung wechselt. Die Bremsinformation wird dem Steuergerät 216 beispielsweise von einer Fahrdynamikregelung oder einem Notbremsassistenten bzw. EBS (englisch: Emergency Braking System) des Fahrzeugs bereitgestellt.

In der zweiten Stellung ist das Umgehungsventil 400 offen, und über die pneumatischen Leitungen 402, 404 wird der maximale Druck des Druckspeichers 202 an das Rückschlagventil 406 bereitgestellt. Ansprechend auf den maximalen Druck öffnet das Rückschlagventil 406 die Direktverbindung zwischen dem Druckspeicher 202 und den ersten Bremsaktoren 108a, 108b, 108c, 108d und sperrt entsprechend die Verbindung zwischen dem Druckminderungsventil 204 und den ersten Bremsaktoren 108a, 108b, 108c, 108d. Somit wird, wenn sich das Umgehungsventil 400 in der zweiten Stellung befindet, über die ersten Bremsaktoren 108a, 108b, 108c, 108d unabhängig von einer Betätigung der Betätigungseinrichtung 104 eine maximale erste Bremskraft 210 auf die Bremsbacken der Bremsen 200a, 200b, 200c, 200d ausgeübt.

Mit der Platzierung des Umgehungsventils 400 im pneumatischen Bremskreis 106 kann ein durch die Betriebsbremse 104 eingeleiteter Bremsvorgang umgangen werden, bei dem sich die erste Bremskraft 210 aufgrund des zurückzulegenden Pedalwegs nur allmählich bis zum Maximum steigern lässt. Mit der Integration des Umgehungsventils 400 in den pneumatischen Bremskreis 106 kann für eine volle Funktion von Fahrzeugsicherheitssystemen wie einer Fahrdynamikregelung oder einem Notbremsassistenten die maximale Gesamtbremskraft des Hybridbremssystems 102 ohne Verzögerung bereitgestellt werden. Das Umgehungsventil 400 wird von der ECU 116 angesteuert, die bei dem in Fig. 4 gezeigten Ausführungsbeispiel des Hybridbremssystems 102 den Notbremsassistenten bzw. EBS des Fahrzeugs integriert. Das Steuergerät 116 ist ausgebildet, um auf Anforderung der Fahrzeugsicherheitssysteme die maximale Bremskraft 210 des pneumatischen Bremskreises 106 über den gesamten Pedalweg der Betriebsbremse 104 bereitzustellen.

Fig. 5 zeigt beispielhafte Diagramme zur Veranschaulichung der möglichen Betriebsbereiche des elektrisch angesteuerten Bremsaktors und des pneumatisch angesteuerten Bremsaktors bei Einsatz eines Umgehungsventils wie in Fig. 4 gezeigt. Gezeigt sind ein erstes Diagramm 500 und ein zweites Diagramm 502, jeweils als kartesisches Koordinatensystem mit einem auf der Abszisse aufgetragenen Pedalweg S eines Bremspedals einer Betätigungseinrichtung und einer auf der Ordinate aufgetragenen Bremskraft F.

Das erste Diagramm 500 zeigt wie das erste Diagramm der Fig. 3 einen Verlauf einer ersten Bremskraft 210 eines beispielhaften pneumatisch angesteuerten ersten Bremsaktors und einen Wertebereich von zweiten Bremskräften 228a, 228b, 228c, 228d von beispielhaften mit einem Elektromotor angesteuerten zweiten Bremsaktoren. Im Gegensatz zum ersten Diagramm in Fig. 3 weist die in Diagramm 500 dargestellte erste Bremskraft 210 unabhängig von dem Pedalweg S einen maximalen Wert auf, d. h., es steht aufgrund der Aktivierung des Umgehungsventils im pneumatischen Bremskreis die maximale erste Bremskraft 210 zum Abbremsen des zugeordneten Rades über den gesamten Pedalweg S zur Verfügung.

Das zweite Diagramm 502 zeigt wie das zweite Diagramm in Fig. 3 eine Charakteristik möglicher Gesamtbremskräfte 230a, 230b, 230c, 230d als Summen aus hier maximaler erster Bremskraft 210 und "positiven" zweiten Bremskräften 228a, 228b, 228c, 228d. Die maximalen Gesamtbremskräfte 230a, 230b, 230c, 230d werden aus der Summe der maximalen ersten Bremskraft 210 und den maximalen zweiten Bremskräften 228a, 228b, 228c, 228d gebildet und stehen über den gesamten Pedalweg S zur Verfügung. Beispielsweise wird eine maximale Gesamtbremskraft 230a aus der Summe der maximalen ersten Bremskraft 210 und der maximalen zweiten Bremskraft 228a gebildet.

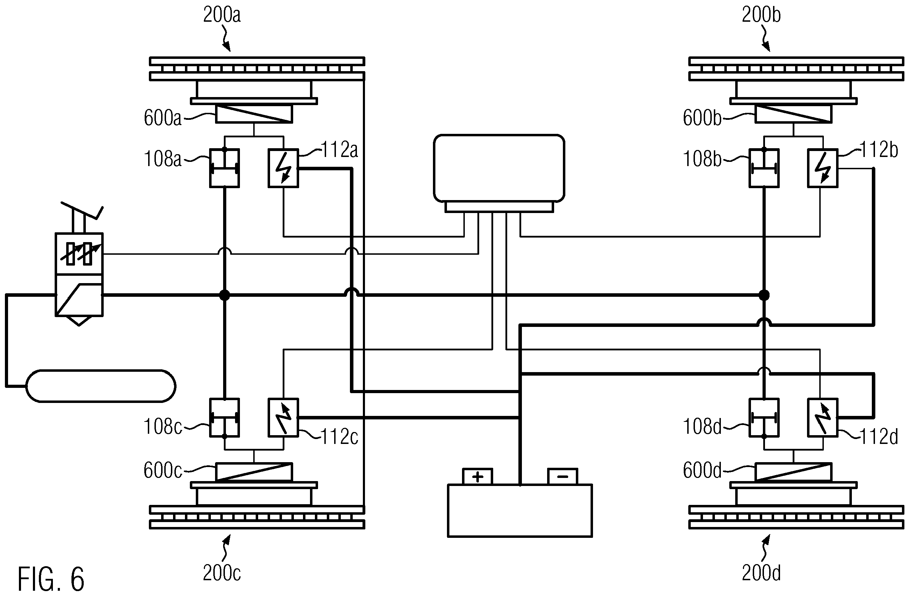

Fig. 6 zeigt ein Schaltdiagramm des Hybridbremssystems 102 gemäß einem weiteren Ausführungsbeispiel der vorliegenden Erfindung. Das in Fig. 6 illustrierte beispielhafte Hybridbremssystem 102 entspricht dem in Fig. 2 gezeigten, mit dem Unterschied, dass die Bremsen 200a, 200b, 200c, 200d jeweils als Keilbremsen ausgeführt sind, die je zwei mit der schiefen Ebene zueinander angeordnete Keile 600a, 600b, 600c, 600d aufweisen, über die die von den ersten Bremsaktoren 108a, 108b, 108c, 108d und den zweiten Bremsaktoren 112a, 112b, 112c, 112d bereitgestellte Gesamtbremskraft auf die Bremsbacken der Bremsen 200a, 200b, 200c, 200d übertragen wird.

Da der zweite Bremskreis 110 über die Ansteuerung der zweiten Bremsaktoren 112a, 112b, 112c, 112d mittels Elektromotoren einen sehr sanften und schnellen Bremsprozess ermöglicht, können die Bremsen 200a, 200b, 200c, 200d in Form von Keilbremsen als Basisbremsen eingesetzt werden, wodurch die erforderliche Normalbremskraft und die Größe der Bremsaktoren 108a, 108b, 108c, 108d, 112a, 112b, 112c, 112d vorteilhaft reduziert werden können.

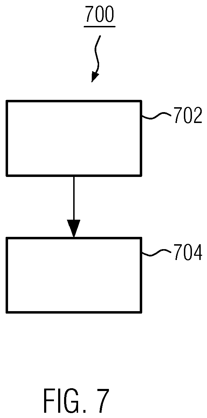

Fig. 7 zeigt ein Ablaufdiagramm eines Ausführungsbeispiels eines Verfahrens 700 zum Ansteuern eines Hybridbremssystems für eine Betriebsbremse für ein Fahrzeug. Das Verfahren 700 kann zum Ansteuern des in den Figuren 1, 2, 4 und 6 gezeigten Hybridbremssystems eingesetzt werden. In einem Schritt 702 des Ansteuerns wird ansprechend auf eine Betätigung einer Betätigungseinrichtung für eine Betriebsbremse eines das Hybridbremssystem aufweisenden Fahrzeugs über einen ersten Bremskreis ein erster Bremsaktor angesteuert, um ein dem ersten Bremsaktor zugeordnetes Rad des Fahrzeugs abzubremsen. In einem Schritt 704 des Ansteuerns wird ansprechend auf die Betätigung der Betätigungseinrichtung über einen zweiten Bremskreis ein zweiter Bremsaktor angesteuert, um das Rad, das neben dem ersten Bremsaktor auch dem zweiten Bremsaktor zugeordnet ist, weitergehend abzubremsen, oder um der von dem ersten Bremsaktor ausgeübten Bremskraft mittels einer entgegengesetzten Zugkraft entgegenzuwirken. Die Schritte 702, 704 können gleichzeitig oder zeitlich versetzt in beliebiger Reihenfolge ausgeführt werden.

Die beschriebenen Ausführungsbeispiele sind nur beispielhaft gewählt und können miteinander kombiniert werden.

### Bezugszeichenliste

- 100: Fahrzeug
- 102: Hybridbremssystem
- 104: Betätigungseinrichtung
- 106: erster Bremskreis
- 108: erster Bremsaktor
- 108a: erster Bremsaktor
- 108b: erster Bremsaktor
- 108c: erster Bremsaktor
- 108d: erster Bremsaktor
- 110: zweiter Bremskreis
- 112: zweiter Bremsaktor
- 112a: zweiter Bremsaktor
- 112b: zweiter Bremsaktor
- 112c: zweiter Bremsaktor
- 112d: zweiter Bremsaktor
- 114: Rad
- 200a: Bremse
- 200b: Bremse
- 200c: Bremse
- 200d: Bremse
- 202: Druckspeicher
- 204: Druckminderventil
- 206: pneumatische Leitung
- 208: Leitungssystem
- 210: erste Bremskraft
- 212: Energiespeicher
- 214: Sensor
- 216: Steuergerät
- 218: Leitungssystem
- 220: elektrische Leitung
- 222a: elektrische Leitung
- 222b: elektrische Leitung
- 222c: elektrische Leitung
- 222d: elektrische Leitung
- 224: Betätigungssignal
- 226a: Steuersignal
- 226b: Steuersignal
- 226c: Steuersignal
- 226d: Steuersignal
- 228a: zweite Bremskraft
- 228b: zweite Bremskraft
- 228c: zweite Bremskraft
- 228d: zweite Bremskraft
- 230a: Gesamtbremskraft
- 230b: Gesamtbremskraft
- 230c: Gesamtbremskraft
- 230d: Gesamtbremskraft
- 300: Diagramm
- 302: Diagramm
- 400: Umgehungsventil
- 402: pneumatische Leitung
- 404: pneumatische Leitung
- 406: Rückschlagventil
- 408: elektrische Leitung
- 410: Steueranschluss
- 412: Steuersignal
- 500: Diagramm
- 502: Diagramm
- 600a: Keile einer Keilbremse
- 600b: Keile einer Keilbremse
- 600c: Keile einer Keilbremse
- 600d: Keile einer Keilbremse
- 700: Verfahren zum Ansteuern eines Hybridbremssystems
- 702: Schritt des Ansteuerns
- 704: Schritt des Ansteuerns

## Patentansprüche

1. Hybridbremssystem (102) für eine Betriebsbremse für ein Fahrzeug (100), wobei das Hybridbremssystem (102) die folgenden Merkmale aufweist:
einen ersten Bremskreis (106) zum Ansteuern eines einem Rad (114) des Fahrzeugs (100) zuordenbaren ersten Bremsaktors (108; 108a, 108b, 108c, 108d) zum Abbremsen des Rades (114) ansprechend auf eine Betätigung einer Betätigungseinrichtung (104) der Betriebsbremse des Fahrzeugs (100); und
einen zweiten Bremskreis (110) zum Ansteuern eines dem Rad (114) des Fahrzeugs (100) zuordenbaren zweiten Bremsaktors (112; 112a, 112b, 112c, 112d) zum Abbremsen des Rades (114) ansprechend auf die Betätigung der Betätigungseinrichtung (104),
**dadurch gekennzeichnet, dass** der erste Bremskreis (106) einen Anschluss für einen Druckluftspeicher (202) aufweist, in dem für einen pneumatischen Betrieb des ersten Bremsaktors (108; 108a, 108b, 108c, 108d) erforderliche Druckluft speicherbar ist, und/oder der zweite Bremskreis (110) einen Anschluss für eine elektrische Energiespeicherquelle (212) aufweist, in der für einen elektrischen Betrieb des zweiten Bremsaktors (112; 112a, 112b, 112c, 112d) erforderliche elektrische Energie speicherbar ist, wobei eine maximale Gesamtbremskraft (230a, 230b, 230c, 230d) zum Abbremsen des Rades (114) einer Kombination einer mittels des ersten Bremsaktors (108; 108a, 108b, 108c, 108d) erzeugbaren maximalen ersten Bremskraft (210) und einer mittels des zweiten Bremsaktors (112; 112a, 112b, 112c, 112d) erzeugbaren maximalen zweiten Bremskraft (228a, 228b, 228c, 228d) entspricht.

2. Hybridbremssystem (102) gemäß Anspruch 1, bei dem der erste Bremskreis (106) ein mit der Betätigungseinrichtung (104) koppelbares Druckminderventil (204) aufweist, das ausgebildet ist, um einen an dem ersten Bremsaktor (108; 108a, 108b, 108c, 108d) anliegenden Druck abhängig von der Betätigung der Betätigungseinrichtung (104) zu steuern.

3. Hybridbremssystem (102) gemäß Anspruch 2, bei dem der erste Bremskreis (106) ferner ein Umgehungsventil (400) aufweist, das ausgebildet ist, um in einer ersten Stellung eine das Druckminderventil (204) umgehende Direktverbindung zwischen einem Anschluss für einen Druckspeicher (202) des Hybridbremssystems (102) und dem ersten Bremsaktor (108; 108a, 108b, 108c, 108d) zu unterbrechen und in einer zweiten Stellung die Direktverbindung freizugeben, um dem ersten Bremsaktor (108; 108a, 108b, 108c, 108d) unabhängig von der Betätigung der Betätigungseinrichtung (104) einen maximalen Druck bereitzustellen.

4. Hybridbremssystem (102) gemäß einem der vorangegangenen Ansprüche, bei dem der zweite Bremskreis (110) einen mit der Betätigungseinrichtung (104) koppelbaren Sensor (214) und ein Steuergerät (216) aufweist, wobei der Sensor (214) ausgebildet ist, um ein der Betätigung der Betätigungseinrichtung (104) entsprechendes Betätigungssignal (224) an das Steuergerät (216) bereitzustellen, und das Steuergerät (216) ausgebildet ist, um unter Verwendung des Betätigungssignals (224) ein Steuersignal (226a, 226b, 226c, 226d) zum Ansteuern des zweiten Bremsaktors (112a, 112b, 112c, 112d) bereitzustellen.

5. Hybridbremssystem (102) gemäß Anspruch 4, bei dem das Steuergerät (216) ausgebildet ist, um einen Sollwert für eine sich aus einer mittels des ersten Bremsaktors (108; 108a, 108b, 108c, 108d) erzeugbaren ersten Bremskraft (210) und einer mittels des zweiten Bremsaktors (112; 112a, 112b, 112c, 112d) erzeugbaren zweiten Bremskraft (228a, 228b, 228c, 228d) zusammensetzende Gesamtbremskraft (230a, 230b, 230c, 230d) zu bestimmen und das Steuersignal (226a, 226b, 226c, 226d) bereitzustellen, um den zweiten Bremsaktor (112a, 112b, 112c, 112d) so anzusteuern, dass die Gesamtbremskraft (230a, 230b, 230c, 230d) dem Sollwert entspricht.

6. Hybridbremssystem (102) gemäß Anspruch 4 oder 5, bei dem das Steuergerät (216) ausgebildet ist, um unabhängig von einem Grad der Betätigung der Betätigungseinrichtung (104) einen Sollwert für die Gesamtbremskraft (230a, 230b, 230c, 230d) zu bestimmen, der eine zwischen 0 % und 100 % der maximalen Gesamtbremskraft (230a, 230b, 230c, 230d) liegende Gesamtbremskraft definiert.

7. Hybridbremssystem (102) gemäß einem der Ansprüche 4 bis 6, bei dem das Steuergerät (216) ausgebildet ist, um das Steuersignal (226a, 226b, 226c, 226d) bereitzustellen, um den zweiten Bremsaktor (112; 112a, 112b, 112c, 112d) so anzusteuern, dass die zweite Bremskraft (228a, 228b, 228c, 228d) der ersten Bremskraft (210) entgegenwirkt.

8. Hybridbremssystem (102) gemäß einem der vorangegangenen Ansprüche, mit einer Keilbremse (200a, 200b, 200c, 200d, 600a, 600b, 600c, 600d), wobei der erste Bremsaktor (108; 108a, 108b, 108c, 108d) und der zweite Bremsaktor (112; 112a, 112b, 112c, 112d) ausgebildet sind, um die Keilbremse (200a, 200b, 200c, 200d, 600a, 600b, 600c, 600d) zum Abbremsen des Rades (114) zu betätigen.

9. Hybridbremssystem (102) gemäß einem der vorangegangenen Ansprüche, bei dem der erste Bremskreis (106) ausgebildet ist, um zum Abbremsen zumindest eines weiteren Rades (114) des Fahrzeugs (100) ansprechend auf die Betätigung der Betätigungseinrichtung (104) einen dem weiteren Rad (114) zuordenbaren weiteren ersten Bremsaktor (108a, 108b, 108c, 108d) anzusteuern und der zweite Bremskreis (110) ausgebildet ist, um zum Abbremsen des zumindest einen weiteren Rades (114) des Fahrzeugs (100) ansprechend auf die Betätigung der Betätigungseinrichtung (104) einen dem weiteren Rad (114) zuordenbaren weiteren zweiten Bremsaktor (112a, 112b, 112c, 112d) anzusteuern.

10. Hybridbremssystem (102) gemäß Anspruch 9, bei dem der zweite Bremskreis (110) ausgebildet ist, um den zweiten Bremsaktor (112a, 112b, 112c, 112d) und den weiteren zweiten Bremsaktor (112a, 112b, 112c, 112d) so anzusteuern, dass der zweite Bremsaktor (112a, 112b, 112c, 112d) eine zweite Bremskraft (228a, 228b, 228c, 228d) bereitstellt, die sich von einer von dem weiteren zweiten Bremsaktor (112a, 112b, 112c, 112d) bereitgestellten weiteren zweiten Bremskraft (228a, 228b, 228c, 228d) unterscheidet.

11. Verfahren (700) zum Ansteuern eines Hybridbremssystems (102) für eine Betriebsbremse für ein Fahrzeug (100), wobei das Hybridbremssystem (102) einen ersten Bremskreis (106) mit einem einem Rad (114) des Fahrzeugs (100) zuordenbaren ersten Bremsaktor (108a, 108b, 108c, 108d) und einen zweiten Bremskreis (110) mit einem dem Rad (114) des Fahrzeugs (100) zuordenbaren zweiten Bremsaktor (112a, 112b, 112c, 112d) aufweist, wobei der erste Bremskreis (106) einen Anschluss für einen Druckluftspeicher (202) aufweist, in dem für einen pneumatischen Betrieb des ersten Bremsaktors (108; 108a, 108b, 108c, 108d) erforderliche Druckluft speicherbar ist, und/oder der zweite Bremskreis (110) einen Anschluss für eine elektrische Energiespeicherquelle (212) aufweist, in der für einen elektrischen Betrieb des zweiten Bremsaktors (112; 112a, 112b, 112c, 112d) erforderliche elektrische Energie speicherbar ist, und wobei das Verfahren (700) die folgenden Schritte aufweist:
Ansteuern (702) des ersten Bremsaktors (108a, 108b, 108c, 108d), um ansprechend auf eine Betätigung einer Betätigungseinrichtung (104) der Betriebsbremse (104) des Fahrzeugs (100) das Rad (114) abzubremsen; und
Ansteuern (704) des zweiten Bremsaktors (112a, 112b, 112c, 112d), um ansprechend auf die Betätigung der Betätigungseinrichtung (104) des Fahrzeugs (100) das Rad (114) abzubremsen, **dadurch gekennzeichnet, dass** eine maximale Gesamtbremskraft (230a, 230b, 230c, 230d) zum Abbremsen des Rades (114) einer Kombination einer durch den Schritt des Ansteuerns (702) mittels des ersten Bremsaktors (108; 108a, 108b, 108c, 108d) erzeugbaren maximalen ersten Bremskraft (210) und einer durch den Schritt des Ansteuerns (704) mittels des zweiten Bremsaktors (112; 112a, 112b, 112c, 112d) erzeugbaren maximalen zweiten Bremskraft (228a, 228b, 228c, 228d) entspricht.

## Claims

1. Hybrid brake system (102) for a service brake for a vehicle (100), wherein the hybrid brake system (102) has the following features:
a first brake circuit (106) for actuating a first brake actuator (108; 108a, 108b, 108c, 108d), attributable to a wheel (114) of the vehicle (100), to brake the wheel (114) in response to an actuation of an actuating device (104) of the service brake of the vehicle (100); and
a second brake circuit (110) for actuating a second brake actuator (112; 112a, 112b, 112c, 112d), attributable to the wheel (114) of the vehicle (100), to brake the wheel (114) in response to the actuation of the actuating device (104),
**characterised in that** the first brake circuit (106) has a connector terminal for a compressed air storage (202), in which compressed air required for a pneumatic operation of the first brake actuator (108; 108a, 108b, 108c, 108d) can be stored, and / or the second brake circuit (110) has a connector terminal for an electrical energy storage source (212), in which electrical energy required for an electrical operation of the second brake actuator (112; 112a, 112b, 112c, 112d) can be stored, wherein a maximum total braking force (230a, 230b, 230c, 230d) for braking the wheel (114) corresponds to a combination of a maximum first braking force (210) that can be generated by means of the first brake actuator (108; 108a, 108b, 108c, 108d) and a maximum second braking force (228a, 228b, 228c, 228d) that can be generated by means of the second brake actuator (112; 112a, 112b, 112c, 112d).

2. Hybrid brake system (102) according to claim 1, wherein the first brake circuit (106) has a pressure-reducing valve (204) that can be coupled to the actuating device (104), the pressure-reducing valve (204) being designed to control a pressure at the first brake actuator (108; 108a, 108b, 108c, 108d) in dependence on the actuation of the actuating device (104).

3. Hybrid brake system (102) according to claim 2, wherein the first brake circuit (106) further has a bypass valve (400), which is designed, in a first position, to interrupt a direct connection bypassing the pressure-reducing valve (204) between a connector terminal for a pressure storage (202) of the hybrid brake system (102) and the first brake actuator (108; 108a, 108b, 108c, 108d) and, in a second position, to clear the direct connection in order to provide a maximum pressure to the first brake actuator (108; 108a, 108b, 108c, 108d) independently of the actuation of the actuating device (104).

4. Hybrid brake system (102) according to one of the preceding claims, wherein the second brake circuit (110) has a sensor (214) that can be coupled to the actuating device (104) and a control unit (216), wherein the sensor (214) is designed to provide an actuation signal (224), corresponding to the actuation of the actuating device (104), to the control unit (216), and the control unit (216) is designed, using the actuation signal (224), to provide a control signal (226a, 226b, 226c, 226d) to actuate the second brake actuator (112a, 112b, 112c, 112d).

5. Hybrid brake system (102) according to claim 4, wherein the control unit (216) is designed to determine a target value for a total braking force (230a, 230b, 230c, 230d), made up of a first braking force (210) that can be generated by means of the first brake actuator (108; 108a, 108b, 108c, 108d) and a second braking force (228a, 228b, 228c, 228d) that can be generated by means of the second brake actuator (112; 112a, 112b, 112c, 112d), and to provide the control signal (226a, 226b, 226c, 226d) in order to actuate the second brake actuator (112a, 112b, 112c, 112d) so that the total braking force (230a, 230b, 230c, 230d) corresponds to the target value.

6. Hybrid brake system (102) according to claim 4 or 5, wherein the control unit (216) is designed to determine, independently of a degree of actuation of the actuating device (104), a target value for the total braking force (230a, 230b, 230c, 230d), which defines a total braking force of between 0% and 100% of the maximum total braking force (230a, 230b, 230c, 230d).

7. Hybrid brake system (102) according to one of claims 4 to 6, wherein the control unit (216) is designed to provide the control signal (226a, 226b, 226c, 226d) in order to actuate the second brake actuator (112; 112a, 112b, 112c, 112d) so that the second braking force (228a, 228b, 228c, 228d) counteracts the first braking force (210).

8. Hybrid brake system (102) according to one of the preceding claims, having a wedge brake (200a, 200b, 200c, 200d, 600a, 600b, 600c, 600d), wherein the first brake actuator (108; 108a, 108b, 108c, 108d) and the second brake actuator (112; 112a, 112b, 112c, 112d) are designed to actuate the wedge brake (200a, 200b, 200c, 200d, 600a, 600b, 600c, 600d) to brake the wheel (114).

9. Hybrid brake system (102) according to one of the preceding claims, wherein the first brake circuit (106) is designed, for the purpose of braking at least one further wheel (114) of the vehicle (100) in response to the actuation of the actuating device (104), to actuate a further first brake actuator (108a, 108b, 108c, 108d) attributable to the further wheel (114), and the second brake circuit (110) is designed, for the purpose of braking the at least one further wheel (114) of the vehicle (100) in response to the actuation of the actuating device (104), to actuate a further second brake actuator (112a, 112b, 112c, 112d) attributable to the further wheel (114).

10. Hybrid brake system (102) according to claim 9, wherein the second brake circuit (110) is designed to actuate the second brake actuator (112a, 112b, 112c, 112d) and the further second brake actuator (112a, 112b, 112c, 112d) so that the second brake actuator (112a, 112b, 112c, 112d) provides a second braking force (228a, 228b, 228c, 228d), which differs from a further second braking force (228a, 228b, 228c, 228d) provided by the further second brake actuator (112a, 112b, 112c, 112d).

11. Method (700) for actuating a hybrid brake system (102) for a service brake for a vehicle (100), wherein the hybrid brake system (102) has a first brake circuit (106), having a first brake actuator (108a, 108b, 108c, 108d) attributable to a wheel (114) of the vehicle (100), and a second brake circuit (110), having a second brake actuator (112a, 112b, 112c, 112d) attributable to the wheel (114) of the vehicle (100), wherein the first brake circuit (106) has a connector terminal for a compressed air storage (202), in which compressed air required for a pneumatic operation of the first brake actuator (108; 108a, 108b, 108c, 108d) can be stored, and / or the second brake circuit (110) has a connector terminal for an electrical energy storage source (212), in which electrical energy required for an electrical operation of the second brake actuator (112; 112a, 112b, 112c, 112d) can be stored, and wherein the method (700) has the following steps:
actuate (702) the first brake actuator (108a, 108b, 108c, 108d), in response to an actuation of an actuating device (104) of the service brake of the vehicle (100), to brake the wheel (114); and
actuate (704) the second brake actuator (112a, 112b, 112c, 112d), in response to the actuation of the actuating device (104) of the vehicle (100), to brake the wheel (114),
**characterised in that**
a maximum total braking force (230a, 230b, 230c, 230d), for the purpose of braking the wheel (114), corresponds to a combination of a maximum first braking force (210) that can be generated by the actuation step (702) by means of the first brake actuator (108; 108a, 108b, 108c, 108d) and a maximum second braking force (228a, 228b, 228c, 228d) that can be generated by the actuation step (704) by means of the second brake actuator (112; 112a, 112b, 112c, 112d).

## Revendications

1. Système (102) de frein hybride pour un frein de service d'un véhicule (100), dans lequel le système (102) de frein hybride a les caractéristiques suivantes :
un premier circuit (106) de frein pour commander un premier actionneur (108 ; 108a, 108b, 108c, 108d) de frein pouvant être associé à une roue (114) du véhicule (100), afin de freiner la roue (114) en réaction à un actionnement d'un dispositif (104) d'actionnement du frein de service du véhicule (100) et
un deuxième circuit (110) de frein pour commander un deuxième actionneur (112 ; 112a, 112b, 112c, 112d) pouvant être associé à la roue (114) du véhicule (100), pour freiner la roue (114) en réaction à l'actionnement du dispositif (104) d'actionnement,
**caractérisé en ce que** le premier circuit (106) de frein a un raccord pour un accumulateur (102) d'air comprimé, dans lequel peut être accumulé de l'air comprimé nécessaire à un fonctionnement pneumatique du premier actionneur (108 ; 108a, 108b, 108c, 108d) de frein, et/ou le deuxième circuit (110) de frein a un raccord pour une source (212) d'accumulation d'énergie électrique, dans laquelle peut être accumulée de l'énergie électrique nécessaire pour un fonctionnement électrique du deuxième actionneur (112 ; 112a, 112b, 112c, 112d) de frein, une force (230a, 230b, 230c, 230d) de freinage totale maximum, pour freiner la roue (114), correspondant à une combinaison d'une première force (210) de freinage maximum pouvant être produite au moyen du premier actionneur (108 ; 108a, 108b, 108c, 108d) de frein et d'une deuxième force (228a, 228b, 228c, 228d) maximum pouvant être produite au moyen du deuxième actionneur (112 ; 112a, 112b, 112c, 112d) de frein.

2. Système (102) de frein hybride suivant la revendication 1, dans lequel le premier circuit (106) de frein a une soupape (204) de détente de la pression, qui peut être couplée au dispositif (104) d'actionnement et qui est constituée pour commander, en fonction de l'actionnement du dispositif (104) d'actionnement, la pression s'appliquant au premier actionneur (108 ; 108a, 108b, 108c, 108d) de frein.

3. Système (102) de frein hybride suivant la revendication 2, dans lequel le premier circuit (106) de frein a en outre une soupape (400) de dérivation, qui est constituée pour, dans une première position, interrompre une liaison directe contournant la soupape (204) de détente, entre un raccord pour un accumulateur (202) de pression du système (102) de frein hybride et le premier actionneur (108 ; 108a, 108b, 108c, 108d) de frein et, dans une deuxième position, dégager la liaison directe, pour mettre à disposition du premier actionneur (108 ; 108a, 108b, 108c, 108d) de frein une pression maximum, indépendamment de l'actionnement du dispositif (104) d'actionnement.

4. Système (102) de frein hybride suivant l'une des revendications précédentes, dans lequel le deuxième circuit (110) de frein a un capteur (214) pouvant être couplé au dispositif (104) d'actionnement et un appareil (216) de commande, le capteur (214) étant constitué pour mettre à disposition, sur l'appareil (216) de commande, un signal (224) d'actionnement correspondant à l'actionnement du dispositif (104) d'actionnement et l'appareil (216) de commande est constitué pour, en utilisant le signal (224) d'actionnement, mettre à disposition un signal (226a, 226b, 226c, 226d) de commande pour commander le deuxième actionneur (112 ; 112a, 112b, 112c, 112d) de frein.

5. Système (102) de frein hybride suivant la revendication 4, dans lequel l'appareil (216) de commande est constitué pour déterminer une valeur de consigne d'une force (230a, 230b, 230c, 230d) de freinage totale se composant d'une première force (210) de freinage pouvant être produite au moyen du premier actionneur (108 ; 108a, 108b, 108c, 108d) de freinage et d'une deuxième force (228a, 228b, 228c, 228d) de freinage pouvant être produite au moyen du deuxième actionneur (112 ; 112a, 112b, 112c, 112d) de frein et pour mettre à disposition le signal (226a, 226b, 226c, 226d) de commande, pour commander le deuxième actionneur (112a, 112b, 112c, 112d) de frein, de manière à ce que la force (230a, 230b, 230c, 230d) de freinage totale corresponde à la valeur de consigne.

6. Système (102) de frein hybride suivant la revendication 4 ou 5, dans lequel l'appareil (216) de commande est constitué pour déterminer, indépendamment d'un degré d'actionnement du dispositif (104) d'actionnement, une valeur de consigne de la force (230a, 230b, 230c, 230d) de freinage totale, qui définit une force de freinage totale, représentant entre 0 % et 100 % de la force (230a, 230b, 230c, 230d) de freinage totale maximum.

7. Système (102) de frein hybride suivant l'une des revendications 4 à 6, dans lequel l'appareil (216) de commande est constitué pour mettre à disposition le signal (226a, 226b, 226c, 226d) de commande, pour commander le deuxième actionneur (112 ; 112a, 112b, 112c, 112d) de frein, de manière à ce que la deuxième force (228a, 228b, 228c, 228d) de freinage agisse en sens contraire de la première force (210) de freinage.

8. Système (102) de frein hybride suivant l'une des revendications précédentes, comprenant un frein (200a, 200b, 200c, 200d, 600a, 600b, 600c, 600d) à coin, le premier actionneur (108 ; 108a, 108b, 108c, 108d) de frein et le deuxième actionneur (112 ; 112a, 112b, 112c, 112d) de frein étant constitués pour, en vue de freiner la roue (114), actionner le frein (200a, 200b, 200c, 200d, 600a, 600b, 600c, 600d) à coin.

9. Système (102) de frein hybride suivant l'une des revendications précédentes, dans lequel le premier circuit (106) de frein est constitué pour commander, en vue de freiner au moins une autre roue (114) du véhicule (110), en réaction à l'actionnement du dispositif (104) d'actionnement, un autre premier actionneur (108a, 108b, 108c, 108d) de frein pouvant être associé à l'autre roue (114), et le deuxième circuit (110) de frein est constitué pour, afin de freiner la au moins une autre roue (114) du véhicule (100), commander, en réaction à l'actionnement du dispositif (104) d'actionnement, un autre deuxième actionneur (112a, 112b, 112c, 112d) de frein pouvant être associé à l'autre roue (114).

10. Système (102) de frein hybride suivant la revendication 9, dans lequel le deuxième circuit (110) de frein est constitué pour commander le deuxième actionneur (112a, 112b, 112c, 112d) de frein et l'autre deuxième actionneur (112a, 112b, 112c, 112d) de frein, de manière à ce que le deuxième actionneur (112a, 112b, 112c, 112d) de frein mette à disposition une deuxième force (228a, 228b, 228c, 228d) de freinage, qui se distingue d'une autre deuxième force (228a, 228b, 228c, 228d) de freinage mise à disposition par l'autre deuxième actionneur (112a, 112b, 112c, 112d) de frein.

11. Procédé (700) de commande d'un système (102) de frein hybride, pour un frein de service d'un véhicule (100), le système (102) de frein hybride ayant un premier circuit (106) de frein ayant un premier actionneur (108a, 108b, 108c, 108d) de frein pouvant être associé à une roue (114) du véhicule (100) et un deuxième circuit (110) de frein ayant un deuxième actionneur (112a, 112b, 112c, 112d) de frein pouvant être associé à la roue (114) du véhicule (100), le premier circuit (106) de frein ayant un raccord pour un accumulateur (202) d'air comprimé, dans lequel peut être accumulé de l'air comprimé nécessaire pour un fonctionnement pneumatique du premier actionneur (108; 108a, 108b, 108c, 108d) de frein et/ou le deuxième circuit (110) de frein a un raccord pour une source (212) d'accumulation d'énergie électrique, dans laquelle peut être accumulée de l'énergie électrique nécessaire pour un fonctionnement électrique du deuxième actionneur (112; 112a, 112b, 112c, 112d) de frein, et dans lequel le procédé (700) a les stades suivants :
commande (702) du premier actionneur (108a, 108b, 108c, 108d) de frein pour freiner la roue (114), en réaction à un actionnement d'un dispositif (104) d'actionnement du frein de service du véhicule (100) et
commande (704) du deuxième actionneur (112a, 112b, 112c, 112d) de frein pour freiner la roue (114), en réaction à l'actionnement du dispositif (104) d'actionnement du véhicule (100),
**caractérisé en ce que**
une force (230a, 230b, 230c, 230d) de freinage totale maximum pour freiner la roue (114) correspond à une combinaison d'une première force (210) de freinage maximum pouvant être produite par le stade de la commande (702) au moyen du premier actionneur (108; 108a, 108b, 108c, 108d) de frein et d'une deuxième force (228a, 228b, 228c, 228d) de freinage maximum pouvant être produite par le stade de la commande (704) au moyen du deuxième actionneur (112; 112a, 112b, 112c, 112d) de frein.
